# EUROPEAN PATENT SPECIFICATION

(11) **EP 2 624 102 B1**
(45) Date of publication and mention of the grant of the patent: **06.09.2017**
(21) Application number: 13165133.3
(22) Date of filing: 20.08.2010
(51) Int. Cl.: G06F 3/03, G06F 3/042, H04M 1/725

(54) **Data Transfer Method and System**
Verfahren und System zur Datenübertragung
Procédé et système de transfert de données

(30) Priority: 20.08.2009 US 544315
(43) Date of publication of application: 07.08.2013
(62) Divisional of application: 10173578.5
(73) Proprietor: Samsung Electronics Co., Ltd., Gyeonggi-do 443-742 (KR)
(72) Inventor: Toledano, Eyal, 443-742 Gyeonggi-do (KR); Bareli, Reuben, 443-742 Gyeonggi-do (KR); Shirron, Dan, 443-742 Gyeonggi-do (KR); Haviv, Elad, 443-742 Gyeonggi-do (KR)
(74) Representative: HGF Limited

(56) References cited:
- EP-A1- 1 237 333
- EP-A2- 2 040 156
- WO-A1-2007/003682
- GB-A- 2 454 482

## Description

### Field of the Invention

The present invention relates to the transfer of data between terminals capable of performing data transmission and reception.

### Background of the Invention

Mobile devices are becoming increasingly integrated in the use their owner makes to replace some of the functions of heavier computer apparatus. As a result, the abilities of small mobile devices, such as cellular telephones, have been enhanced in recent years such that they are able both to generate data, such as media files, text files, data files and other data, such as location data generated by GPS, as well as to receive and use data and data files generated by other systems. However, the art has so far failed to provide an intuitive and immediate way that enables the transfer of files or data (such as Images, Text, HTML files, URL, etc.) from a PC to a mobile device, and vice versa, in a manner that is efficient and convenient for the user. Currently, for instance, a user wishing to transfer notepad text from a PC to a mobile phone is required to perform several actions such as saving text to file, establishing connection, dragging and dropping a file, finding the file in the phone, opening the file, cutting & pasting, etc.

All the methods and systems available in the prior art suffer from drawbacks inasmuch as they are time-consuming, cumbersome to use and do not provide an intuitive, easy to use, immediate transfer solution, which enables the transfer of files or data from PC to mobile phone and vice versa.

WO 2007/003682 A1 describes a technique for allowing a user to select and manipulate objects presented on a display, without requiring physical contact with the display, using a device (e.g. smart-phone) equipped with a camera.

### Summary Of The Invention

Accordingly, the present invention has been made to solve the above-mentioned problems occurring in the prior art, and the present invention provides a method and a system, which enable simple, intuitive and rapid transmission of an object, such as a file or data, between a mobile device and a Personal Computer (PC).

In accordance with an aspect of the invention there is provided a data transmission method comprising: displaying an object and at least a portion of a screen of a second terminal on a screen of a first terminal, the portion of the second screen having been captured by a camera of the first terminal; receiving a transmission command of the object; and transmitting at least one of the object and metadata of the object to the second terminal in response to the transmission command, wherein the transmitted at least one of the object and the metadata of the object is displayed on the screen of the second terminal and the object is displayed at a point of the screen of the second terminal at which the camera of the first terminal is pointed, the point being determined based on the screen of the second terminal having one or more markers, each marker comprising a preset pattern representing the position of each marker; and wherein the markers are identified by capturing, by the camera, a first image before the markers are placed on the screen, capturing, by the camera, a second image containing the markers, and subtracting the first image from the second image.

In accordance with another aspect of the present invention there is provided a data transmission system comprising: a screen of a first terminal for displaying an object and at least a portion of a screen of a second terminal on a screen of a first terminal, the first terminal including a camera for capturing the portion of the screen of the second terminal; and an application service processor for receiving a transmission command of the object and transmitting at least one of the object and metadata of the object to the second terminal in response to the transmission command, wherein the transmitted at least one of the object and the metadata of the object is displayed on the screen of the second terminal and the object is displayed at a point of the screen of the second terminal at which the camera of the first terminal is pointed, the application service processor being arranged to determine the point based on the screen of the second terminal having one or more markers, each marker comprising a preset pattern representing the position of each marker; by capturing, by the camera, a first image before the markers are placed on the screen, capturing, by the camera, a second image containing the markers, and subtracting the first image from the second image.

In a method and a system according to the present invention, it is possible to achieve simple, intuitive and rapid transmission of an object, such as a file or data, between terminals capable of performing data transmission and reception.

### Brief Description Of The Drawings

In the drawings:
Fig. 1 is a schematic illustration of the main blocks of the system of the invention;
Fig. 2 illustrates a technical sequence performed by a system according to one particular exemplary embodiment of the invention;
Fig. 3 shows three different examples of markers used to illustrate one embodiment of the invention;
Figs. 4 - 7 illustrate a specific example of one method according to the invention for identifying in the mobile device the location on a PC screen at which the camera of the mobile device is pointing;
Figs. 8 - 10 illustrate a specific example of one method according to the invention by which a PC extracts an object located at the specified coordinates on its screen, which have been calculated by the mobile device;
Fig. 11 is an example of use in which an image is acquired from a browser;
Fig. 12 is an example of use in which text is acquired from a notepad;
Fig. 13 is an example of use in which details of a meeting are acquired from a calendar;
Fig. 14 is an example of use in which an image is "pushed" from a mobile device to a PC;
Fig. 15 is an example of use in which a mobile device interacts with two PCs;
Fig. 16 (A and B) illustrates the operation of the invention when taking a picture from the Internet Explorer browser and transferring it to a mobile phone;
Fig. 17 (A and B) illustrates the operation of the invention when transferring selected text from a PC notepad to cellular phone;
Fig. 18 (A and B) illustrates the operation of the invention when transferring an MP3 music file from the Windows file Explorer to a cellular phone;
Fig. 19 (A and B) illustrates the operation of the invention when transferring a picture from a cellular phone by pushing it to a PC File Explorer;
Fig. 20 (A and B) illustrates the operation of the invention when transferring a picture from a cellular phone by pushing it to a PC to become an attachment of an Outlook outgoing e-mail message; and
Fig. 21 (A and B) illustrates the direct installation of a phone software in the cellular phone, from a web application store.

### Detailed Description of the Invention

Throughout this description, unless otherwise specified, the terms "mobile device" and "mobile phone" are used interchangeably to refer to communication devices that, in addition to their communication capabilities, are also equipped with computing capabilities, which allows them to generate data that can be used by a PC, or use data generated by a different system, such as a PC, or both.

Furthermore, for the purposes of this description the terms "PC", "personal computer", "computing apparatus", "desktop computer" or the like, are used to indicate computing equipment and systems in the broadest sense, and include laptop computers, fixed or mobile terminals, screens equipped with computing capabilities, and any data handling equipment equipped with a CPU and communication capabilities.

In addition, as a presumption for the following description of the present invention, the first terminal described below refers to a receiver-side terminal for receiving data, and the second terminal described below refers to a transmitter-side terminal.

The invention provides an immediate, user friendly solution for the transfer of data from a PC or other mobile device to a mobile phone and vice versa. The system of the invention, when operating to transfer data from a PC to a mobile phone, operates as follows:
a) The user points the mobile phone's camera at the object on the PC screen, which he wants to use on the mobile phone;
b) The user presses a key (for example) on the mobile phone that activates a program, which identifies what the camera is looking at;
c) The PC transfers the identified object and or its metadata to the mobile phone using the appropriate transfer channel (Bluetooth, WiFi, USB cable, cellular network or other).
d) The mobile phone identifies the object type and stores/displays/run/etc it using the appropriate application.

In one embodiment, the invention exploits the ability of the second terminal (PC) to "identify" where the user aims the mobile phone's camera, using a marker-based solution (image processing). In such a solution, the second terminal (PC) displays a predefined image based on an area having a particular pattern (i.e. marker) on the screen and the camera of the first terminal (mobile device) captures it. The marker is chosen in such a way that it is easy to use known image processing algorithms (such as barcode reading) to understand the location the phone's camera captured. Alternative ways for the second terminal (PC) to understand the coordinates of the object at which the camera is aiming can be provided by the skilled person, for instance by sending the phone's camera view image to the pc and using image processing algorithms such as SURF algorithm [Herbert Bay, Andreas Ess, Tinne Tuytelaars, Luc Van Gool, "SURF: Speeded Up Robust Features", Computer Vision and Image Understanding (CVIU), Vol. 110, No. 3, pp. 346--359] or other, to register it in the desktop image or vice versa. Another alternative is using a camera coupled with the second terminal (PC) to identify the movements of the first terminal (mobile device), or by using three-dimensional location information of the first terminal (mobile device) relative to the second terminal (PC) screen.

In another embodiment of the invention the pointing coordinates are calculated in real time. In such case there is a benefit to displaying augmented metadata on the objects in mobile preview (for example a file size or highlight around the chosen object). When the user chooses to interact with the object he will initiate the process (for example by pressing a key or touch screen).

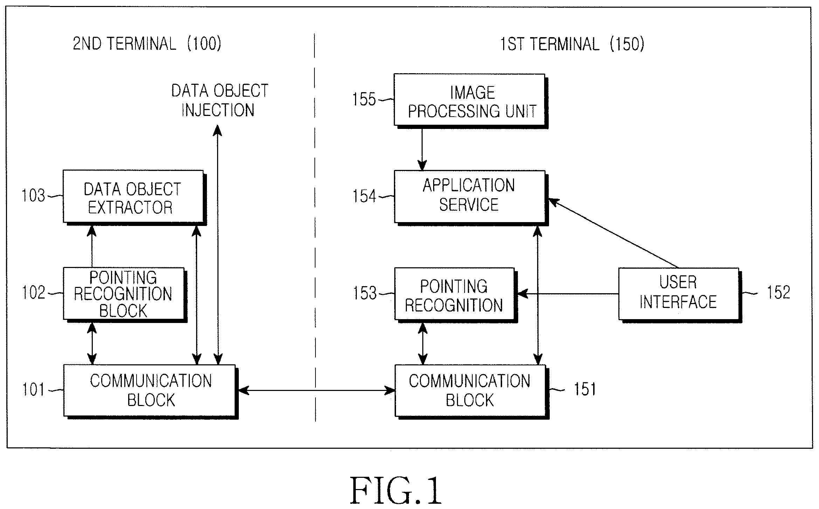

Fig. 1 schematically shows the main blocks of a system according to the invention. In this system a first terminal (mobile phone) 150 is in communication with a second terminal (PC) 100 via any suitable communication channel, including but not limited to Bluetooth, WiFi, USB cable or cellular network. The second terminal (PC) 100 is equipped with a Data Object Extractor (DOE) 103 the role of which is to handle the data object and/or its metadata to be transferred to the first terminal (mobile phone) 150, once its coordinates have been determined and supplied to it. The DOE 103 consists of a software service running on the second terminal (PC) 100, or part of the OS of the second terminal (PC) 100.

The mobile device is provided with an image processing module 155 and with an application service (AS) 154, the role of which will be explained below. The image processing module 155 acquires from the camera an optical image from the screen of the second terminal (PC) home server 100, which includes the embedded marker and calculates the coordinates of the image at which the user has pointed the camera, and transmits said coordinates to the second terminal (PC) 100. The DOE 103 uses the coordinates transmitted to it by the first terminal (mobile phone) 150 to identify the data object selected by the user and to extract it into a transmissible form. The transmissible form used depends, of course, on that type of data object; for instance, for an image appearing on webpage the original image file is taken. If a text field is selected its content will be taken as a textual data.

The data file or object extracted according to the above is then transmitted to the first terminal (mobile device) 150 via the communication line and is received by the AS, which makes it available to the appropriate mobile application.

As will be apparent to the skilled person, some steps can be performed differently, such as the identification of the coordinates of the object selected by the user on the screen of the second terminal (PC) 100 can be carried out in the second terminal (PC) 100 itself, rather than on the first terminal (mobile device) 150, by providing to it an image acquired by the first terminal (mobile device) 150, which includes sufficient information for this purpose. Alternatively, a combination of mobile and second terminal (PC) 100 image processing may be employed.

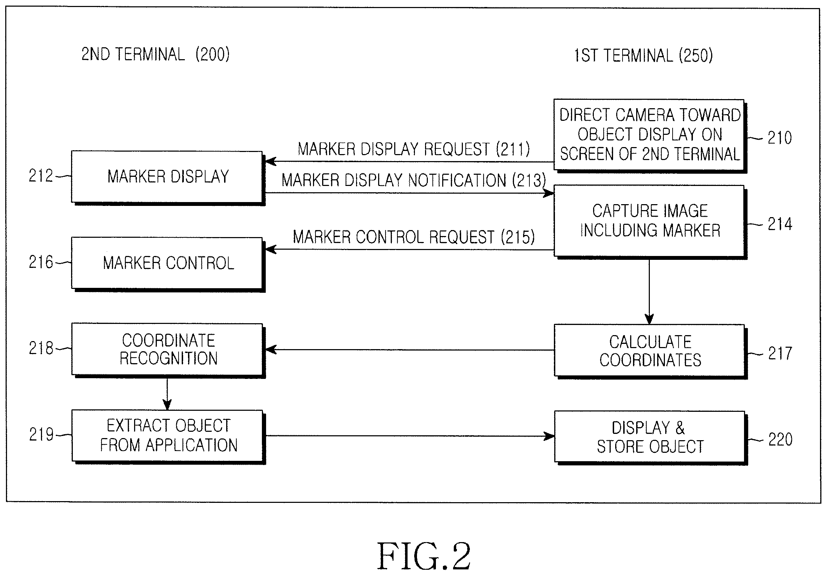

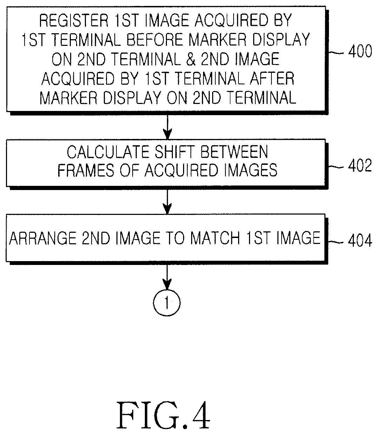

Turning now to Fig. 2, and exemplary sequence of operation of the system of Fig. 1 is schematically illustrated. The sequence involves pointing the camera of a first terminal 250 (and this particular example, a first terminal 250) at an object which is displayed on the screen of the second terminal digital broadcast receiver 200 (step tuner 210). A key in the first terminal 250 is predefined to activate the following steps. In the following steps, the phone takes a picture of the pc screen and then sends a command to the second terminal 200 to display the marker (step 211). The second terminal 200 displays the marker and notifies the phone (step 213). The phone then takes an additional picture, this time containing the marker (step 214). The phone image processing module uses the two pictures to calculate the coordinates (see detailed description in Fig 4-7). Once the coordinates were identified by the phone they are sent to the second terminal 200. The DOE 103 identifies which object is shown on the screen at the coordinates that have been determined and extracts the object from the application, which is then transmitted to the first terminal 250 for further use.

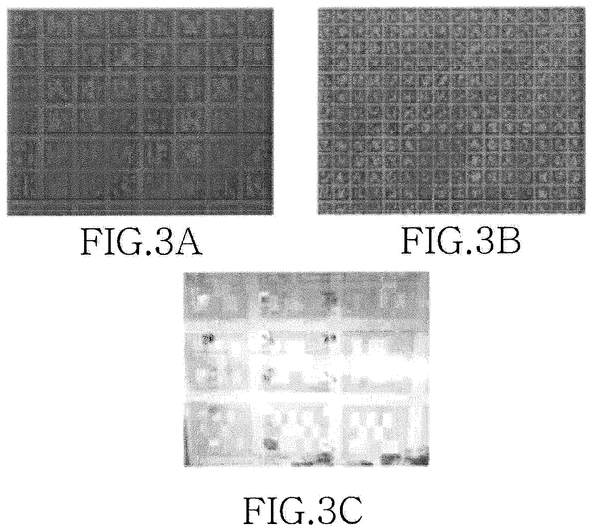

Fig. 3 shows three illustrative different types of markers. Marker A includes black and blue indicia (blue being the light color in the black-and-white figure), marker B includes black and red indicia (red being the light color in the black-and-white figure). Note that by using different sizes of markers (the blue one has bigger elements than the red) image processing will be successful in different distances from the screen of the second terminal. The actual marker which is displayed on the screen of the second terminal will be a mix of red and blue and it will be split again to its red and blue components after it was captured by the phone camera side. Marker C is a blend of a marker with the desktop image captured by the camera. Blending of the marker in the current active desktop makes it less visible and irritating to the viewer. Other methods of making the marker less visible are discussed at [Anselm Grundh¨ ofer, Manja Seeger, Ferry H ̈ antsch, and Oliver Bimber, Bauhaus-University Weimar, "Dynamic Adaptation of Projected Imperceptible Codes"].

Fig. 4 through 7 illustrate a process according to an embodiment of the invention, for identifying the real, X,Y coordinates of an object on the screen of the second terminal, at which the user of a first terminal has pointed his camera. Fig. 4 illustrates the process of capturing two images using a first terminal. The first image (A) is before the second terminal places the marker on the screen and the second image (B) contains the marker. The screen image (A) acquired by the first terminal before the marker display of the second terminal and the screen image (B) acquired by the first terminal after the marker display of the second terminal are registered, respectively (step 400).

Then, the shift between the two frames (this shift is a result of hand movements) is calculated (step 402), and image B is aligned to match A (step 404). This results in image B'. Subtraction of the two images (A and B) provides an image of the marker without the desktop background (C). Further more, we then get the red component of the image(C(red)) and blue component (C(blue)).

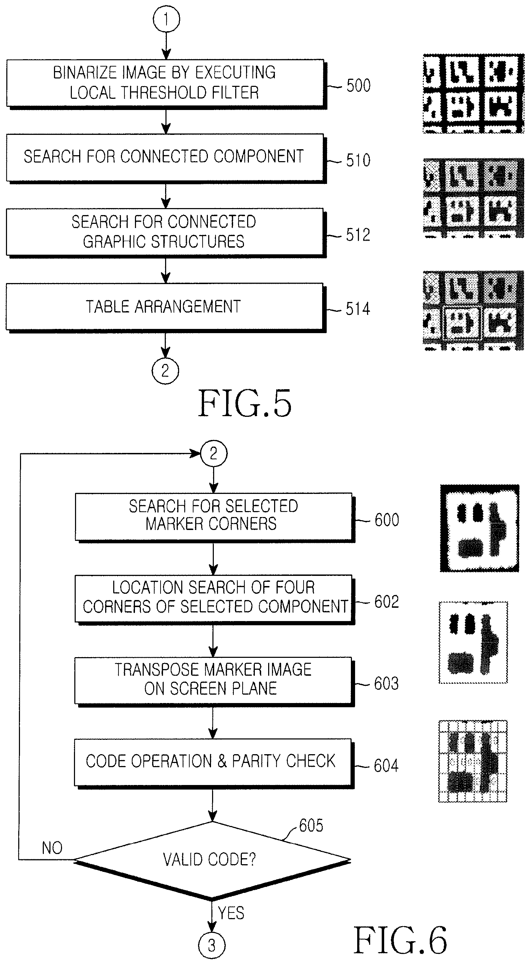

Fig. 5 shows how a specific pattern inside the marker images received is recognized, after the operation of FIG. 4.

First a local threshold filter is run in order to create a binary image. In other words, the image is binarized by running the local threshold filter (step 500).

Then, through searching for an component connected to the image binarized through the operation of step 500 (step 510) and searching for a connected graphic structure (step 512), the connected components are identified. Then, a result of the identification is arranged in a table (step 514), so that the best component is chosen to match the marker pattern characteristics (aspect ratio, size etc.).

In Fig. 6 the pattern's code is read to attempt to determine its authenticity. First, the markers corners are identified through searching of the selected marker corner (step 600). Then, through a location search of four corners of the component selected through step 600 (step 602), the image is transposed to be exactly square and in the size it was originally displayed on screen (step 603). Then, the patterns code is calculated and validated using an error detection/correction algorithm, so as to perform a code operation and a parity check (step 604). If it is not a valid code, the next best fitting pattern is chosen and step 2 is repeated. If the code is valid, the process proceeds.

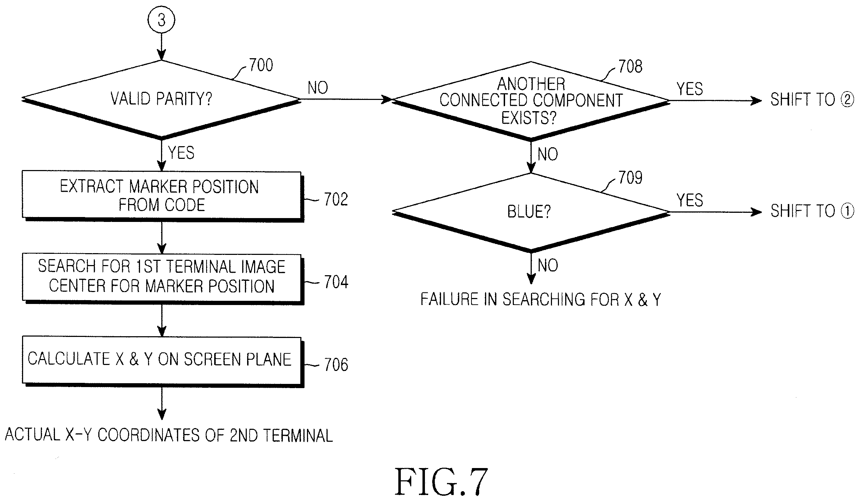

In Fig. 7, the marker's position is extracted according to the code it represents. Then its position relative to the screen center of the first terminal (the point where the user was aiming at) is found and is sent to the second terminal.

Specifically, as a result of the valid parity check in step 700, when it is a valid code, step 702 is performed, in which the marker position is extracted from the code. Then, the image center of the first terminal with respect to the extracted marker position is detected, and X and Y on the screen plane of the second terminal are calculated, so that the actual coordinates of the second terminal are identified (step 706).

Meanwhile, as a result of the valid parity check in step 700, when it is not a valid code, it is checked if there is another connected component (step 708). As a result of the checking, when there is another connected component, the process shifts to stage ②. When another connected component does not exist, it is checked if the image center of the first terminal is blue (step 709). As a result of the checking, when the image center of the first terminal is blue, the process shifts to stage ①. When the image center of the first terminal is not blue, it is concluded that the searching is failure and the process is terminated.

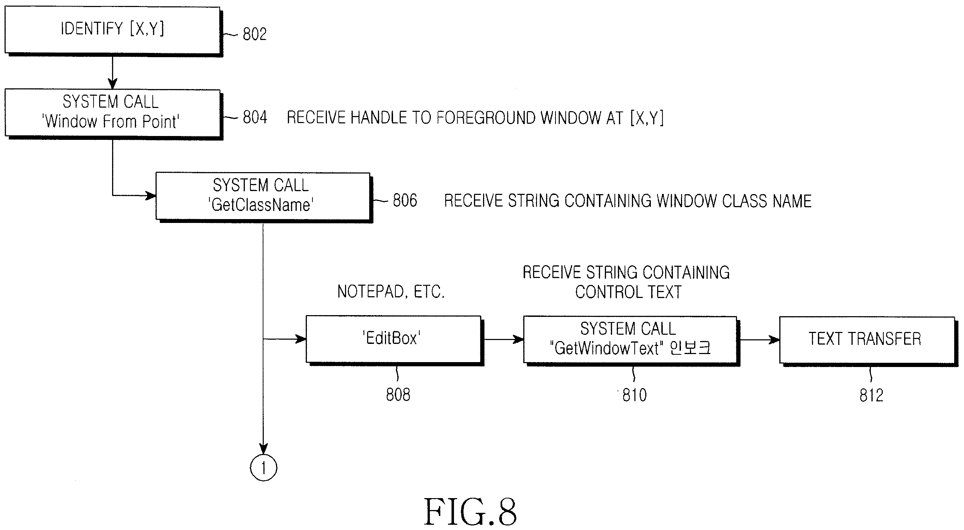

Figs. 8 through 10 illustrate one example of extraction of an object located at the coordinates on the screen of the second terminal that have been calculated by the first terminal when using Windows XP operating system on second terminal 200.

Referring to FIG. 8, [X, Y] coordinates of the object displayed on the screen of the second terminal are identified (step 802), and a handle reception to a foreground window is executed at the [X,Y] coordinates through "Window From Point" system call in step 804. In step 806, through "GetClassName" system call, a string containing a window class name is received. Then, in step 808, the edit box of an application, such as notepad, is checked. Thereafter, in step 810, through "GetWindowText" system call, a string containing a control text is received. Next, in step 812, the text is delivered.

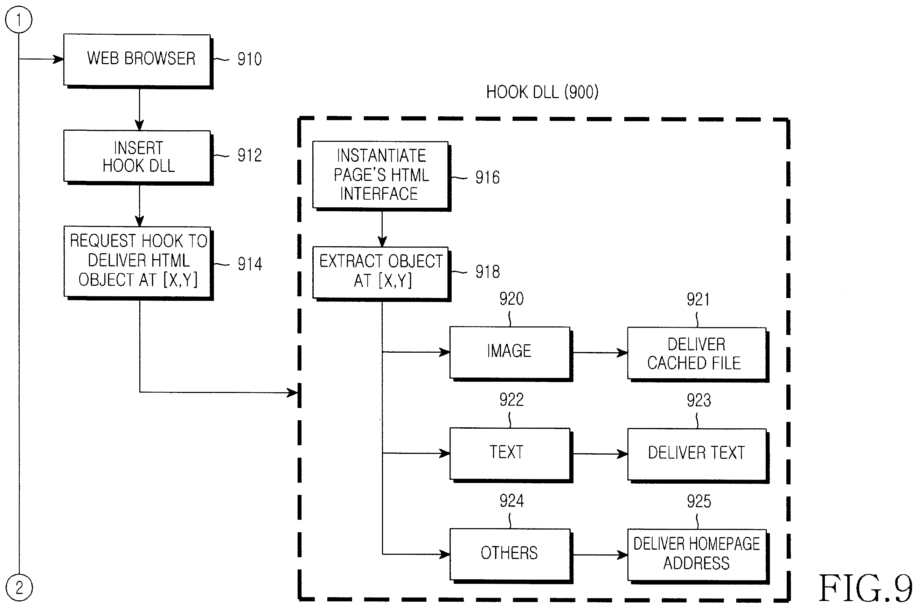

Referring to FIG. 9, after the operation according to the flowchart as shown in FIG. 4, when the generated image is a web browser (step 910), a hook dll is inserted in step 912, and the hook is then requested to deliver an HTML object of [X,Y] in step 914. Then, in the hook DLL 900, the HTML interface of the page is instantiated (step 916), and the object at [X,Y] is extracted (step 918). When the extracted object is an image (step 920), a URO and a cached file are delivered (step 921). When the extracted object is a text (step 922), the text is delivered (step 923). When the extracted object is an object, which is not a file or text (step 924), a web page address is delivered (step 925).

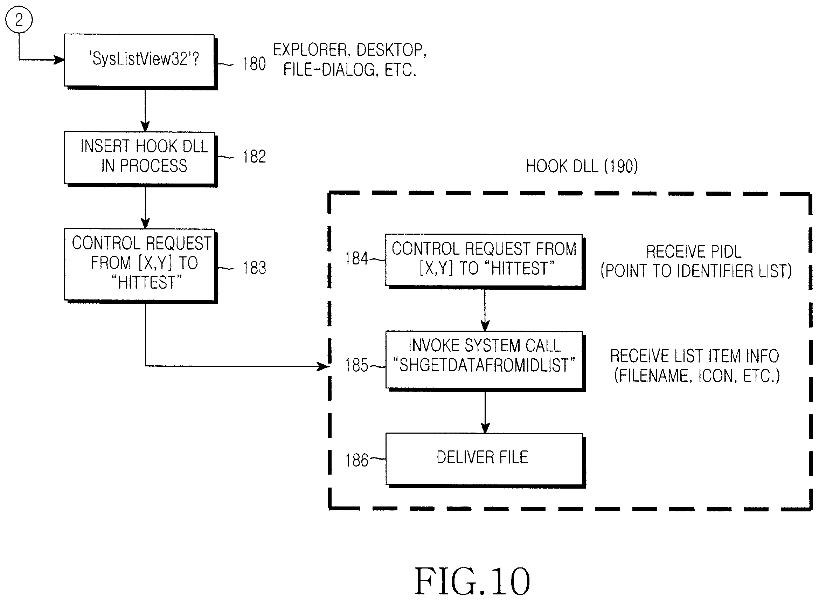

Referring to FIG. 10, after the operation according to the flowchart as shown in FIG. 5, when an optimum component matching with the marker pattern characteristic has been selected, that is, in the case of "SysListView32" corresponding to a shell, such as explorer, desktop, file dialog, etc. (step 180), a hook dll is inserted in the process (step 182), and control is requested to "HitTest" at [X,Y] (step 183). In the hook DLL 190, a Pointer to identifier List (PIDL) is received by requesting control to "HitTest" at [X,Y] in step 184, list item information (filename, icon, etc.) is received by performing "SHGetDataFromIDList" system call in step 185, and the file is then delivered in step 186.

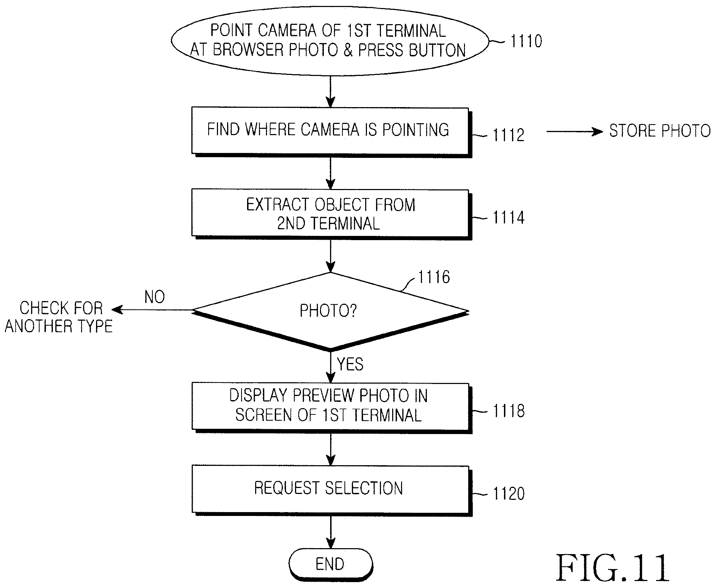

Fig. 11 illustrates the acquisition by a first terminal of a photo found in a browser open on the screen of the second terminal.

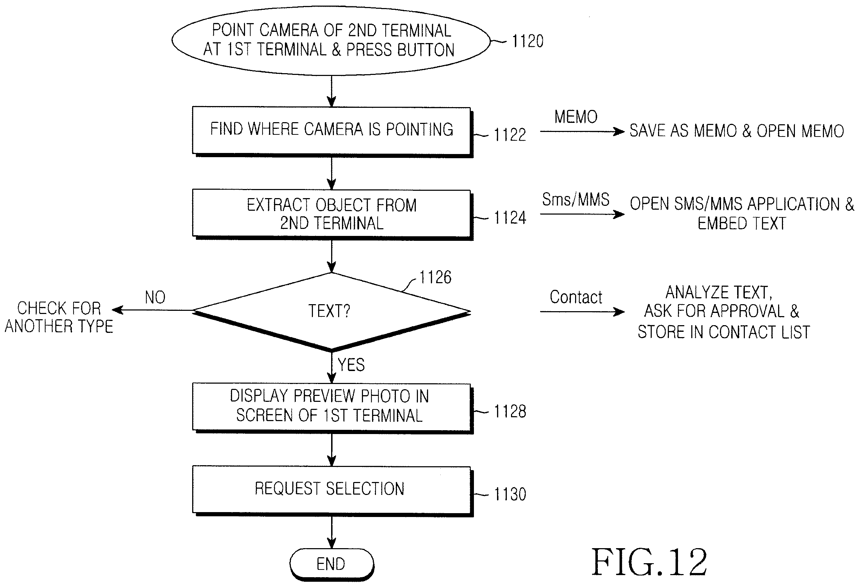

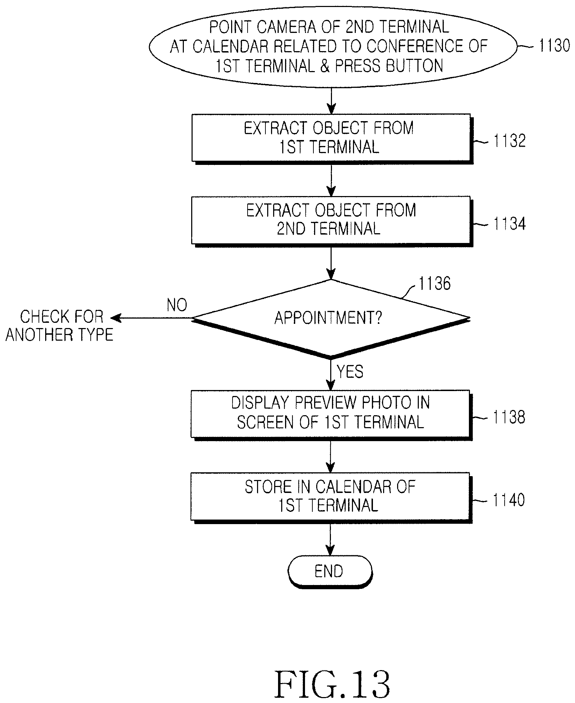

First, when a camera of the first terminal is pointed at a photograph of a browser and a start button of the first terminal is then pressed (step 1110), a predetermined point in the screen of the first terminal at which the camera is pointing is found through searching (step 1112). At this time, the found point and the corresponding photograph are stored in the first terminal (step 1112). Then, the object is extracted from the second terminal in step 1114, and it is checked in step 1116 if the object displayed on the second terminal is a photograph. As a result of the checking, when the object is not a photograph, the process shifts to a corresponding operation (FIG. 12 or FIG. 13). When the object is a photograph, a preview photograph is displayed on the screen of the first terminal in step 1118. Then, in step 1120, an application employed when the displayed photograph is transmitted to the second terminal is selected and the photograph is then transmitted to the second terminal.

Fig. 12 illustrates the acquisition by a first terminal 250 of text from a notepad shown on the screen of the second terminal 200.

First, when the camera of the first terminal is pointed at a photograph of a browser and a start button of the first terminal is then pressed (step 1120), a predetermined point in the screen of the first terminal at which the camera is pointing is found through searching (step 1122).

At this time, the found point and the corresponding memo are stored in the first terminal are opened (step 1123). Then, the object is extracted from the second terminal in step 1124, which is performed through the operation of opening the SMS/MMS application and inserting a text in the application in step 1131. Then, it is checked in step 1126 if the object displayed on the second terminal is a text. As a result of the checking, when the object is not a text, the process shifts to a corresponding operation (FIG. 12 or FIG. 13). When the object is a text, a preview text is displayed on the screen of the first terminal in step 1128. Thereafter, the text is analyzed in the first terminal in step 1132, and is then stored in the approval request and contact list.

In step 1130, an application employed when the displayed text is transmitted to the second terminal is selected and the text is then transmitted to the second terminal.

Fig. 13 illustrates the acquisition by a first terminal of calendar data relating to a meeting which is shown in a calendar display on the screen of the second terminal.

First, when the camera of the first terminal is pointed at calendar data relating to a meeting displayed on the second terminal and a start button of the first terminal is then pressed (step 1130), a predetermined point in the screen of the first terminal at which the camera is pointing is found through searching (step 1132).

Then, in step 1134, the object is extracted from the second terminal.

In step 1136, it is checked if the object displayed on the second terminal is an appointment. As a result of the checking, when the object is not an appointment, the process shifts to a corresponding operation (FIG. 12 or FIG. 13). When the object is an appointment, a preview text is displayed on the screen of the first terminal in step 1138.

Then, in step 1140, an application employed when the displayed calendar data is transmitted to the second terminal is selected and the text is then transmitted to the second terminal.

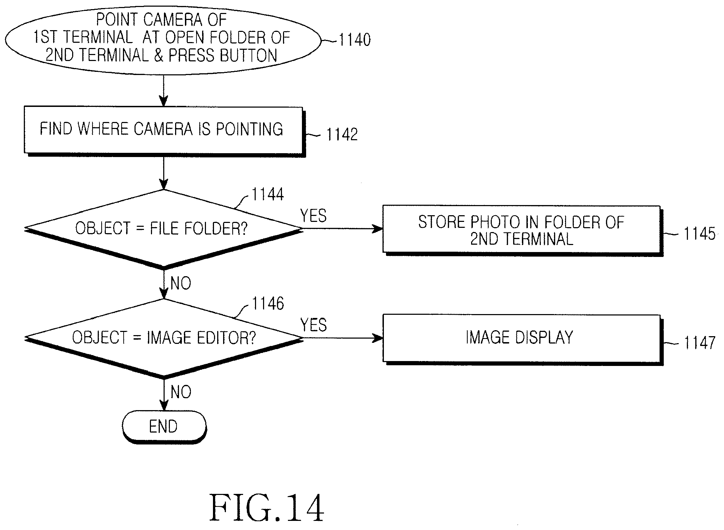

Fig. 14 illustrates the pushing of a photo by a first terminal to the second terminal data storage or to a second terminal viewer application. The user first chooses on the mobile side the object (in the example, a picture) that he wants to push to the computer. He then points the device to the location on the screen of the second terminal to which he wishes to push the object. It can be an open folder or an open viewer application which supports the file type that was selected for pushing (merely as an example, Fig. 14 makes reference to an open folder). Then the user presses the first terminal "action" button and the push process begins. In step 1140, the first terminal and second terminal "identify" where the phone was aiming to. Then, the second terminal understands which object is currently presented on the screen at that point. If it's an open folder it will copy the file to this folder and if it's a viewing application it will copy the file to a temporary directory and open it inside the application.

That is to say, in step 1142, a predetermined point in the screen of the first terminal at which the camera of the first terminal is pointing is found through searching. In step 1144, it is checked if the object is identical to the file folder. As a result of the checking, when the object is identical to the file folder, the object is stored in the folder of the second terminal in step 1145. When the object is not identical to the file folder, it is checked in step 1146 if the object is identical to an image editor. When the object is identical to an image editor, the image is displayed (step 1147). When the object is not identical to an image editor, the process is ended.

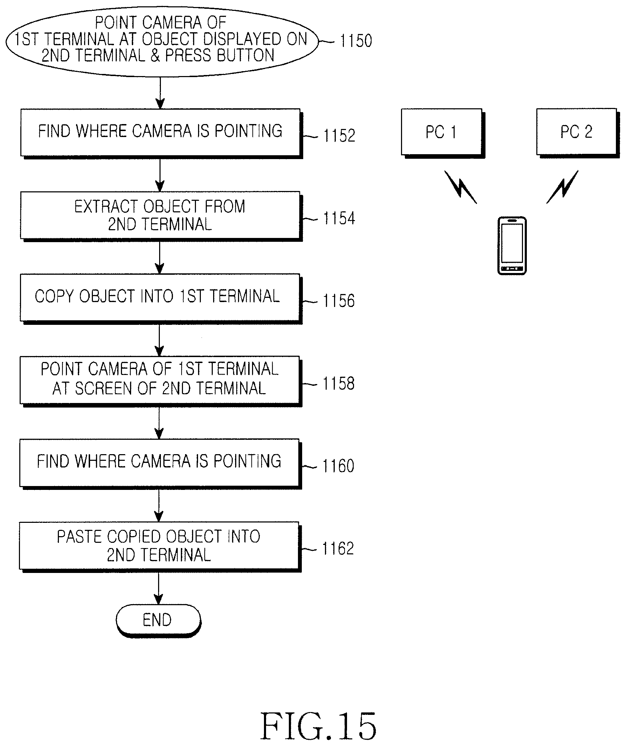

Fig. 15 illustrates another embodiment of the invention in which the first terminal is used as a bridge between two separate PCs. In this mode, and as clearly shown in the figure, the first terminal first acquires an object from second terminal 1, and then pushes it to second terminal 2. In this way, the first terminal becomes a data transfer apparatus between different second terminals ("Universal clipboard").

More specifically, referring to FIG. 15, the camera of the first terminal is first pointed at the second terminal in step 1150, and a predetermined point in the screen of the second terminal at which the camera is pointing is found through searching (step 1152).

Then, the object is extracted from the second terminal in step 1154, and the extracted object is copied into the first terminal in step 1156. Then, the camera of the first terminal is pointed at the screen of the second terminal in step 1158, and a predetermined point at which the camera is pointing is found through searching (step 1160). Thereafter, in step 1162, the object copied in step 1156 is pasted into the second terminal.

In an alternative embodiment of the invention the identification process of an object on the screen of the second terminal, which is to be transferred to a first terminal, (or a location on the screen of the second terminal to which an object is to be pushed) is identified by using a pointing device and directly pointing at the desired object or location. Any suitable pointing device can be used, such as a mouse or a finger, if a touch screen is used, with or without the additional use of a keyboard key, a mouse button click or other input device. As will be appreciated by the skilled person, using a pointing device simplifies the location and identification process and, therefore, may be desirable in some instances.

The following additional examples will further illustrate the invention.

### Example 1

### Taking a picture from internet explorer to phone.

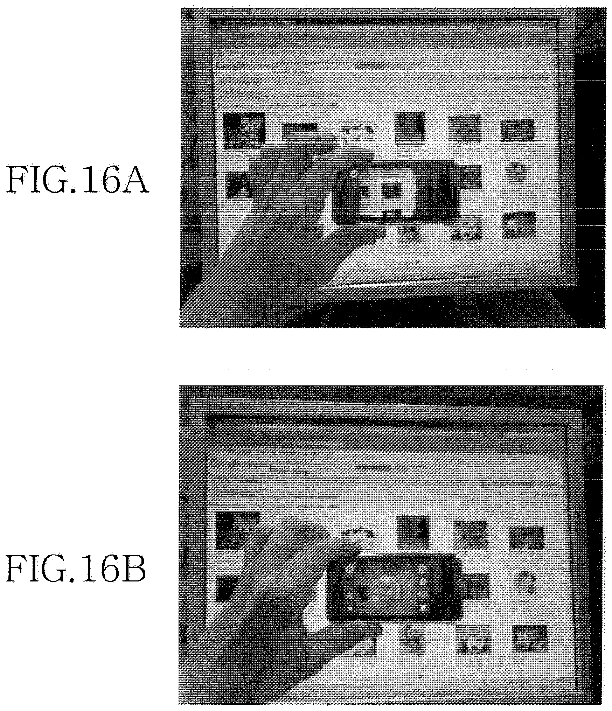

The following describes in detail the process of transferring a picture shown on the screen of the second terminal in Internet Explorer to the phone, with reference to Fig. 16 (A. and B). First of all the user activates the application. He sees a preview of the phones camera capture including a crosshair in the screen center. When the crosshair is aimed on the picture to be transferred (Fig. 16A).

He presses the phone's action button. The process described in Figs. 2-8 starts and yields the coordination of the crosshair on the screen of the second terminal. The coordination is sent to the second terminal where the data object extraction process starts (described in Figs. 8-10). First the 'WindowFromPoint' system call is invoked which returns a handle to the internet explorer window. Then the 'GetClassName' system call is invoked using this handle to get a string describing the window's class name (Internet Explorer_Server in this example). The software injects a hook dll to the process and then sends a request to that hook to deliver the HTML object at the location found by the phone. The hook dll extracts the object in this position (a picture in this example) and returns a picture URL and the cached image file. The file is then sent to the phone side and invokes the user interface to allow various operations on the picture (Fig. 16B) such as sending as MMS, opening in the default phone browser, etc.

### Example 2

### Taking a selected text out of notepad to phone.

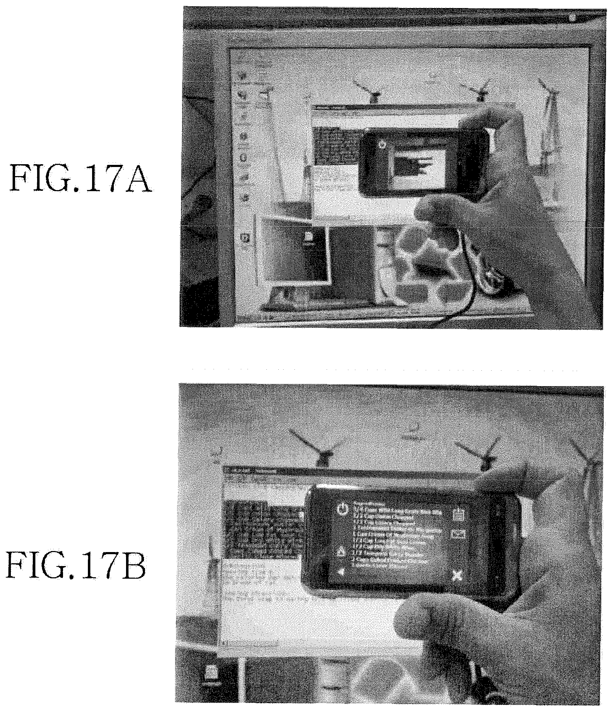

The following describes in detail the process of transferring selected text in the notepad application, with reference to Fig. 17 (A and B). First of all the user opens a notepad document in which he selects a specific text he wants to transfer. Then, the user activates the application. He sees a preview of the phone camera capture including a crosshair in the screen center. When the crosshair is aimed at the notepad application (Fig. 17A) he presses the phone's action button. The process described in Figs. 2-8 starts and yields the coordination of the crosshair on the screen of the second terminal. The coordination is sent to the second terminal where the data mining process starts (described in Figs. 8-10). First the 'WindowFromPoint' system call is invoked which returns a handle to the notepad window. Then the GetClassName' system call is invoked using this handle to get a string describing the window's class name ('EditBox' in this example). The software invokes the 'GetWindowText' system call and gets the selected text. A text file is created from the received text and the file is then sent to the phone side. The phone software receives the file and invokes the appropriate user interface to allow various operations on the text (Fig. 17B) such as send as SMS, open in Notes application etc.

### Example 3

### Transferring a music file (mp3) from Windows file Explorer to a cellular phone

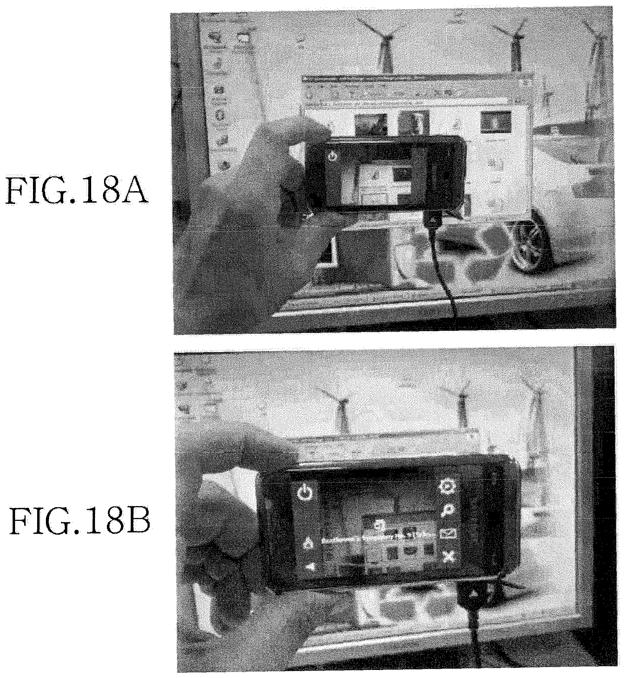

The following describes in detail the process of transferring an mp3 music file from Windows file Explorer. First of all the user opens directory containing the mp3 file in File Explorer. Then, the user activates the application. He sees a preview of the phone camera capture including a crosshair in the screen center. When the crosshair is aimed at the desired music file (Fig. 18A) he presses the phone's action button.

The process described in Figs. 2-8 starts and yields the coordination of the crosshair on the screen of the second terminal. The coordination is sent to the second terminal where the data mining process starts (described in Figs. 8-10). First the 'WindowFromPoint' system call is invoked which returns a handle to the file explorer window. Then the 'GetClassName' system call is invoked using this handle to get a string describing the window's class name ('SysListView32' in our case). The software injects a hook dll to the process and then sends a request to that hook to deliver shell object at location found by the phone. The hook dll extract the PIDL (pointer to identifier list) in this position and invokes the 'SHGetDataFromDList' system call to get the item information on the file (filename, icon etc). The information is used to locate the file and to send it to the phone. The phone software receives the file and invokes the appropriate user interface to allow various operations on the file (Fig. 18B) such as opening in the default browser etc.

### Example 4

### Transferring a picture from a first terminal to a second terminal File Explorer

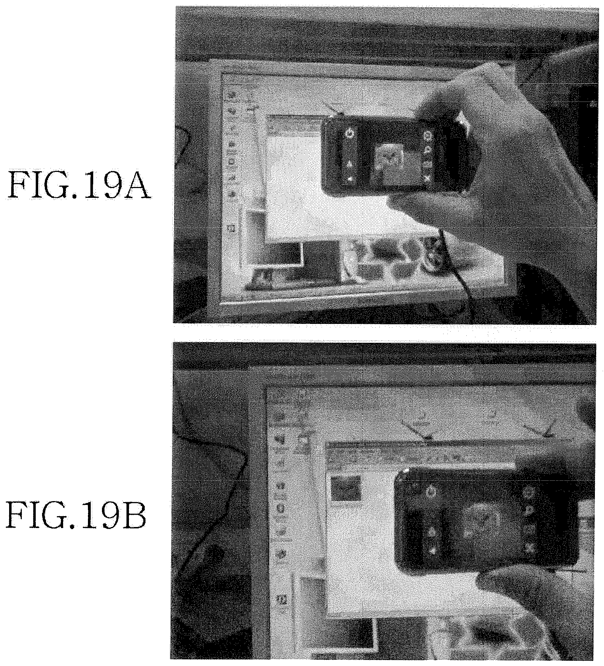

The following describes in detail the process of transferring a picture from the a first terminal to Windows file Explorer. First of all the user uses the phone application to select an image to be transferred. Then, the user activates the push operation from the software's GUI. He sees a preview of the phones camera capture including a crosshair in the screen center. When the crosshair is aimed at the desired second terminal file explorer window (Fig. 19A) he presses the phone's action button.

The process described in Figs. 2-8 starts and yields the coordination of the crosshair on the screen of the second terminal. The coordination is sent to the second terminal where the data mining process starts (described in Figs. 8-10). First the 'WindowFromPoint' system call is invoked which returns a handle to the File Explorer window. Then the 'GetClassName' system call is invoked using this handle to get a string describing the window's class name ('SysListView32' in our case). It then sends a response to the phone telling whether the object which had been identified (a folder in our case) is an eligible target to support the "push" operation according to the pushed object type (an image file in this example).

The phone then sends the picture file from the phone to the second terminal software (Fig. 19B). The second terminal software writes the file to the system temporary files folder and moving it to the target location, determined by using the 'GetWindowText' system call which indicates the folder path (except in cases of special folders such 'Desktop', 'My Documents' etc which are handled using 'SHGetSpecialFolderPath' system call.

### Example 4

### Transferring a picture from a phone to a second terminal as an attachment of an Outlook outgoing email message

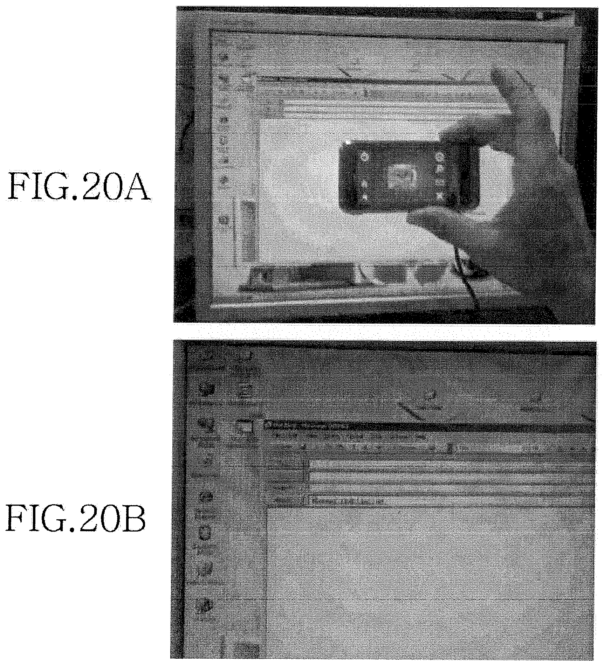

The following describes in detail the process of transferring a picture from the phone to an attachment of an Outlook outgoing email message. First of all the user opens a new or existing outgoing Outlook email message. The user then uses the phone software to select an image to be transferred. Then, the user activates the push operation from the software's GUI. He sees a preview of the phones camera capture including a crosshair in the screen center. When the crosshair is aimed on the opened outlook message window in the second terminal (Fig. 20A) he presses the phone's action button.

The process described in Figs. 2-8 starts and yields the coordination of the crosshair on the screen of the second terminal. The coordination is sent to the second terminal where the data mining process starts (described in Figs. 8-10). First the 'WindowFromPoint' system call is invoked which returns a handle to a component in Outlook new message dialog. Then the 'GetClassName' system call is invoked using this handle to get a string describing the component's class name. The string is then compared to a list of possible values related to Outlook new message dialog (which is different for different versions and different view-types). A process of getting the previous component parent handle and retrieving its class name is initiated until there is a match or until a 'parentless' handle is obtained. If a match is found, the mobile is notified and the object is sent to the second terminal. Then, using COM objects, an object representing the Outlook application is generated to access the new message dialog "message components"(subject, body etc), and the file path of the object which had been sent is added to the message attachments (Fig. 20B).

### Example 5

### Direct installation of a phone software in a first terminal from a web application store

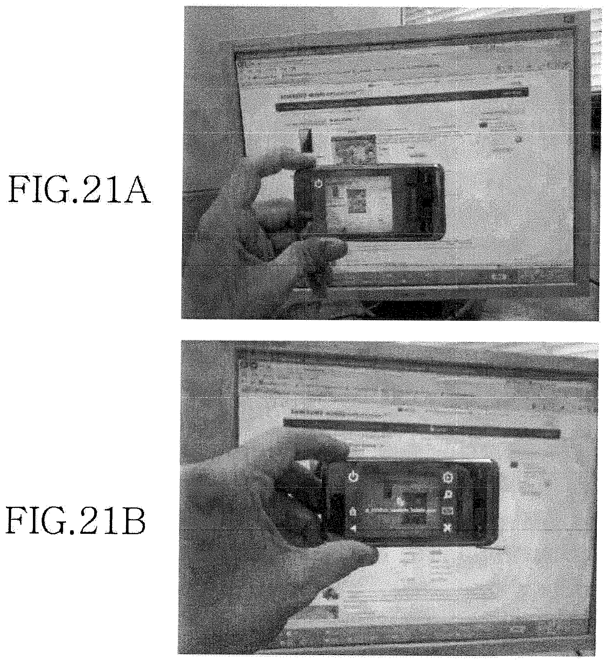

The following describes in detail the process of installing a phone software just by pointing and clicking on its web page or icon in a web application store. First of all the user opens a web browser and goes to an application store. Then, the user activates the application. He sees a preview of the phones camera capture including a crosshair in the screen center. When the crosshair is aimed at the desired application (which can be a screenshot or text describing it - Fig. 21A) he presses the phone's action button.

The process described in Figs. 2-8 starts and yields the coordination of the crosshair on the screen of the second terminal. The coordination is sent to the second terminal where the data mining process starts (described in Figs. 8-10). First the 'WindowFromPoint' system call is invoked which returns a handle to the Internet Explorer window. Then the 'GetClassName' system call is invoked using this handle to get a string describing the window's class name (Internet Explorer_Server in this example). The software injects a hook dll to the process and then sends a request to that hook to deliver an HTML object at location found by the phone. The hook dll extracts the object in this position (a picture in this example) and returns a picture URL. The data object extractor identifies that the image object contains an HTML URL reference (e.g. <img src="TennisGame.jpg"href=http://uk.samsungmobile.com/games/TennisGame.ja d />) to an application installation file, and uses the URL data to download the installation file from the web. The file is then sent to the phone. The phone software receives the file and invokes the appropriate user interface to allow the installation (among various operations) to take place (Fig. 21B).

As will be apparent to the skilled person, the invention allows performing many activities that were not visibly carried out by conventional methods known in the art. An illustrative list of uses of the invention, provided for illustration only and not intended to limit such uses in any way, is as follows:
1. second terminal to phone - file transfer
   a. Transfer of photos from second terminal -> Phone (as wallpaper)
   b. Files
2. Outlook:
   a. Contact Sync (specific or all)
   b. Calendar Sync (specific or today)
   c. Point at mail folder ask to bring all, unread, today etc
3. Phone to phone -Transfer data between phones
4. Video (second terminal->phone): pointing on flash video player
   a. Send URL to phone
   b. Convert stream to file and send to phone
   c. Stream to phone from second terminal (local, over cell phone network)
5. Text (notepad, word)
   a. Easy and fast to write SMS
   b. Text- > contacts
   c. Write address in plain text - > Mobile Navigation Application
6. Transfer of files second terminal->(mobile)>second terminal examples:
   a. Office<->home (students)
   b. School<->home
   c. Work computer<->presentation computer
7. Point at maps and send coordination to navigation application on the first terminal. Easy to setup destination
8. Music server Point at a song
   a. Copy play list (private or public place -cafe) and enable to buy
   b. Upload songs to internet server
   c. Instead of direct copy second terminal will stream selected song to mobile
9. Application store - point at an application and install in phone (one click)
10. In selected search engine point the phone on preview image and bring the original image
11. Backup my SMSs
12. Point the phone at news and receive updates from the same feed or subject (e.g. gossip)
13. Non-second terminal
   a. Fastfood - point the phone on the teller screen to pass information about my phone number when the food is ready receive SMS
   b. Bulleting board - copy/post the ads to the first terminal
14. Business card exchange between one first terminal to the other.

All the above description has been given for the purpose of illustration and is not meant to limit the invention in any way, except as defined in the claims to follow.

## Claims

1. A data transmission method comprising:
displaying an object and at least a portion of a screen of a second terminal (100) on a screen of a first terminal (150), the portion of the second screen having been captured by a camera of the first terminal (150);
receiving a transmission command of the object; and
transmitting at least one of the object and metadata of the object to the second terminal (100) in response to the transmission command,
wherein the transmitted at least one of the object and the metadata of the object is displayed on the screen of the second terminal (100) and the object is displayed at a point of the screen of the second terminal (100) at which the camera of the first terminal (150) is pointed, the point being determined (217) based on the screen of the second terminal (100) having one or more markers, each marker comprising a preset pattern representing the position of each marker; and wherein the markers are identified by capturing, by the camera, a first image before the markers are placed on the screen, capturing, by the camera, a second image containing the markers, and subtracting the first image from the second image.

2. The data transmission method of claim 1, wherein transmitting the at least one of the object and the metadata of the object comprises:
copying (1156) the at least one of the object and the metadata of the object; and
pasting (1162) the copied at least one of the object and the metadata of the object to the second terminal (100).

3. The data transmission method of claim 1 or 2, wherein transmitting the at least one of the object and the metadata of the object comprises:
searching (1160) for the point on the screen of the second terminal (100) at which the camera of the first terminal (150) is pointed; and
pasting (1162) the at least one of the object and the metadata of the object based on the point.

4. The data transmission method of claim 1, 2 or 3, wherein transmitting the at least one of the object and the metadata of the object comprises:
transmitting data of a file folder to allow the second terminal (100) to store the data of the file folder, if the object is the file folder.

5. The data transmission method of any preceding claim, wherein transmitting the at least one of the object and the metadata of the object comprises:
transmitting an image to allow the second terminal (100) to display the image on the screen of the second terminal (100), if the object is the image.

6. The data transmission method of any preceding claim, wherein receiving the transmission command comprises:
determining that the transmission command is input, if a push operation of a Graphic User Interface, GUI, of corresponding software is activated by a user of the first terminal (150).

7. The data transmission method of any preceding claim, wherein receiving the transmission command comprises:
receiving the transmission command, if a particular indication indicating a center of a camera view is positioned on the object during execution of a camera capture preview function of the first terminal (150).

8. A data transmission system comprising:
a screen of a first terminal (150) for displaying an object and at least a portion of a screen of a second terminal (100) on a screen of a first terminal (150), the first terminal (150) including a camera for capturing the portion of the screen of the second terminal (100); and
an application service processor (154) for receiving a transmission command of the object and transmitting at least one of the object and metadata of the object to the second terminal (100) in response to the transmission command,
wherein the transmitted at least one of the object and the metadata of the object is displayed on the screen of the second terminal (100) and the object is displayed at a point of the screen of the second terminal (100) at which the camera of the first terminal (150) is pointed, the application service processor (154) being arranged to determine the point based on the screen of the second terminal (100) having one or more markers, each marker comprising a preset pattern representing the position of each marker; by capturing, by the camera, a first image before the markers are placed on the screen, capturing, by the camera, a second image containing the markers, and subtracting the first image from the second image.

9. The data transmission system of claim 8, wherein the application service processor (154) is arranged to copy the at least one of the object and the metadata of the object and paste the copied at least one of the object and the metadata of the object to the second terminal (100).

10. The data transmission system of claim 8 or 9, wherein the application service processor (154) is arranged to search for the point on the screen of the second terminal (100) at which the camera of the first terminal (150) is pointed, and paste the at least one of the object and the metadata of the object based on the point.

11. The data transmission system of claim 8, 9 or 10, wherein the application service processor (154) is arranged to transmit data of a file folder to allow the second terminal (100) to store the data of the file folder, if the object is the file folder.

12. The data transmission system of any of claims 8 to 11, wherein the application service processor (154) is arranged to transmit an image to allow the second terminal (100) to display the image on the screen of the second terminal (100), if the object is the image.

13. The data transmission system of any of claims 8 to 12, wherein the application service processor (154) is arranged to determine that the transmission command is input, if a push operation of a Graphic User Interface, GUI, of corresponding software is activated by a user of the first terminal (150).

14. The data transmission system of any of claims claim 8 to 13, wherein the application service processor (154) is arranged to receive the transmission command, if a particular indication indicating a center of a camera view is positioned on the object during execution of a camera capture preview function of the first terminal (150).

## Patentansprüche

1. Ein Verfahren zur Datenübertragung, das Folgendes umfasst:
Anzeigen eines Objekts und zumindest eines Abschnitts eines Bildschirms eines zweiten Endgeräts (100) auf einem Bildschirm eines ersten Endgeräts (150), wobei der Abschnitt des zweiten Bildschirms mittels einer Kamera des ersten Endgeräts (150) erfasst wurde;
Empfangen eines Übertragungsbefehls des Objekts; und
Übertragen eines Objekts und/oder der Metadaten des Objekts an das zweite Endgerät (100) infolge des Übertragungsbefehls,
wobei das übertragene Objekt und/oder die übertragenen Metadaten des Objekts auf dem Bildschirm des zweiten Endgeräts (100) angezeigt werden, und wobei das Objekt auf einem Punkt des Bildschirms des zweiten Endgeräts (100) angezeigt wird, auf den die Kamera des ersten Endgeräts (150) gerichtet ist, wobei der auf dem Bildschirm des zweiten Endgeräts (100) ermittelte (217) Punkt mindestens einen Marker aufweist, wobei jeder Marker ein vorbestimmtes Muster umfasst, das die Position jedes Markers darstellt; und wobei die Marker identifiziert werden, indem ein erstes Bild vor der Platzierung der Marker auf dem Bildschirm mittels der Kamera erfasst wird, indem die Kamera ein zweites Bild mit den Markern erfasst, und indem das erste Bild von dem zweiten Bild subtrahiert wird.

2. Das Verfahren zur Datenübertragung nach Anspruch 1, wobei die Übertragung des Objekts und/oder der Metadaten des Objekts Folgendes umfasst:
Kopieren (1156) des Objekts und/oder der Metadaten des Objekts; und
Einfügen (1162) des kopierten Objekts und/oder der kopierten Metadaten des Objekts in das zweite Endgerät (100).

3. Das Verfahren zur Datenübertragung nach Anspruch 1 oder 2, wobei die Übertragung des Objekts und/oder der Metadaten des Objekts Folgendes umfasst:
Suchen (1160) nach dem Punkt auf dem Bildschirm des zweiten Endgeräts (100), auf den die Kamera des ersten Endgeräts (150) gerichtet ist; und
Einfügen (1162) des Objekts und/oder der Metadaten des Objekts basierend auf dem Punkt.

4. Das Verfahren zur Datenübertragung nach Anspruch 1, 2 oder 3, wobei die Übertragung des Objekts und/oder der Metadaten des Objekts Folgendes umfasst:
Übertragen von Daten eines Dateiordners, um zuzulassen, dass das zweite Endgerät (100) Daten des Dateiordners speichert, wenn es sich bei dem Objekt um den Dateiordner handelt.

5. Das Verfahren zur Datenübertragung nach einem der vorhergehenden Ansprüche, wobei die Übertragung des Objekts und/oder der Metadaten des Objekts Folgendes umfasst:
Übertragen eines Bildes, um zuzulassen, dass das zweite Endgerät (100) das Bild auf dem Bildschirm des zweiten Endgeräts (100) anzeigt, wenn es sich bei dem Objekt um das Bild handelt.

6. Das Verfahren zur Datenübertragung nach einem der vorhergehenden Ansprüche, wobei der Empfang des Übertragungsbefehls Folgendes umfasst:
Ermitteln, ob der Übertragungsbefehl eingegeben wurde, wenn ein Push-Vorgang einer grafischen Benutzeroberfläche (Graphic User Interface, GUI) einer entsprechenden Software von einem Benutzer des ersten Endgeräts (150) aktiviert wurde.

7. Das Verfahren zur Datenübertragung nach einem der vorhergehenden Ansprüche, wobei das Empfangen des Übertragungsbefehls Folgendes umfasst:
Empfangen des Übertragungsbefehls, wenn eine bestimmte Anzeige, die einen Mittelpunkt einer Kameraansicht anzeigt, während der Ausführung einer Vorschaufunktion der Kameraerfassung des ersten Endgeräts (150) auf dem Objekt positioniert ist.

8. Ein System zur Datenübertragung, das Folgendes umfasst:
einen Bildschirm eines ersten Endgeräts (150) zum Anzeigen eines Objekts und zumindest eines Abschnitts eines Bildschirms eines zweiten Endgeräts (100) auf einem Bildschirm eines ersten Endgeräts (150), wobei das erste Endgerät (150) eine Kamera zur Erfassung des Abschnitts des Bildschirms des zweiten Endgeräts (100) aufweist; und
einen Prozessor eines Anwendungsdienstes (154) für den Empfang eines Übertragungsbefehls des Objekts und für die Übertragung des Objekts und/oder der Metadaten des Objekts an das zweite Endgerät (100) infolge des Übertragungsbefehls,
wobei das übertragene Objekt und/oder die übertragenen Metadaten des Objekts auf dem Bildschirm des zweiten Endgeräts (100) angezeigt werden, und wobei das Objekt auf einem Punkt des Bildschirms des zweiten Endgeräts (100) angezeigt wird, auf den die Kamera des ersten Endgeräts (150) gerichtet ist, wobei der Prozessor des Anwendungsdienstes (154) dafür ausgelegt ist, den Punkt basierend auf dem Bildschirm des zweiten Endgeräts (100) mit mindestens einem Marker zu ermitteln, wobei jeder Marker ein vorbestimmtes Muster umfasst, das die Position jedes Markers darstellt; indem ein erstes Bild mittels der Kamera erfasst wird, bevor die Marker auf dem Bildschirm platziert werden, indem die Kamera ein zweites Bild mit den Markern erfasst, und indem das erste Bild von dem zweiten Bild subtrahiert wird.

9. Das System zur Datenübertragung nach Anspruch 8, wobei der Prozessor des Anwendungsdienstes (154) dafür ausgelegt ist, das Objekt und/oder die Metadaten des Objekts zu kopieren und das kopierte Objekt und/oder die kopierten Metadaten des Objekts in das zweite Endgerät (100) einzufügen.

10. Das System zur Datenübertragung nach Anspruch 8 oder 9, wobei der Prozessor des Anwendungsdienstes (154) dafür ausgelegt ist, nach dem Punkt auf dem Bildschirm des zweiten Endgeräts (100) zu suchen, auf den die Kamera des ersten Endgeräts (150) gerichtet ist, und das Objekt und/oder die Metadaten des Objekts basierend auf dem Punkt einzufügen.

11. Das System zur Datenübertragung nach Anspruch 8, 9 oder 10, wobei der Prozessor des Anwendungsdienstes (154) dafür ausgelegt ist, Daten eines Dateiordners zu übertragen, um zuzulassen, dass das zweite Endgerät (100) die Daten des Dateiordners speichert, wenn es sich bei dem Objekt um den Dateiordner handelt.

12. Das System zur Datenübertragung nach einem der Ansprüche 8 bis 11, wobei der Prozessor des Anwendungsdienstes (154) dafür ausgelegt ist, ein Bild zu übertragen, um zuzulassen, dass das zweite Endgerät (100) das Bild auf dem Bildschirm des zweiten Endgeräts (100) anzeigt, wenn es sich bei dem Objekt um das Bild handelt.

13. Das System zur Datenübertragung nach einem der Ansprüche 8 bis 12, wobei der Prozessor des Anwendungsdienstes (154) dafür ausgelegt ist, zu ermitteln, ob der Übertragungsbefehl eingegeben wurde, wenn ein Push-Vorgang einer grafischen Benutzeroberfläche (Graphic User Interface, GUI) einer entsprechenden Software von einem Benutzer des ersten Endgeräts (150) aktiviert wurde.

14. Das System zur Datenübertragung nach einem der Ansprüche 8 bis 13, wobei der Prozessor des Anwendungsdienstes (154) dafür ausgelegt ist, den Übertragungsbefehl zu empfangen, wenn eine bestimmte Anzeige, die einen Mittelpunkt einer Kameraansicht anzeigt, während der Ausführung einer Vorschaufunktion der Kameraerfassung des ersten Endgeräts (150) auf dem Objekt positioniert ist.

## Revendications

1. Un procédé de transmission de données comprenant :
l'affichage d'un objet et d'au moins une partie d'un écran d'un deuxième terminal (100) sur un écran d'un premier terminal (150), la partie du deuxième écran ayant été capturée par un appareil de prise de vues du premier terminal (150),
la réception d'une commande de transmission de l'objet, et
la transmission d'au moins un élément parmi l'objet et des métadonnées de l'objet au deuxième terminal (100) en réponse à la commande de transmission,
où le au moins un élément transmis parmi l'objet et les métadonnées de l'objet est affiché sur l'écran du deuxième terminal (100) et l'objet est affiché à un point de l'écran du deuxième terminal (100) vers lequel l'appareil de prise de vues du premier terminal (150) est pointé, le point étant déterminé (217) en fonction de l'écran du deuxième terminal (100) possédant un ou plusieurs marqueurs, chaque marqueur comprenant un motif prédéfini représentant la position de chaque marqueur, et où les marqueurs sont identifiés par la capture, par l'appareil de prise de vues, d'une première image avant que les marqueurs soient placés sur l'écran, la capture, par l'appareil de prise de vues, d'une deuxième image contenant les marqueurs, et la soustraction de la première image de la deuxième image.

2. Le procédé de transmission de données selon la Revendication 1, où la transmission du au moins un élément parmi l'objet et les métadonnées de l'objet comprend :
la copie (1156) du au moins un élément parmi l'objet et les métadonnées de l'objet, et
le collage (1162) du au moins un élément copié parmi l'objet et les métadonnées de l'objet vers le deuxième terminal (100).

3. Le procédé de transmission de données selon la Revendication 1 ou 2, où la transmission du au moins un élément parmi l'objet et les métadonnées de l'objet comprend :
la recherche (1160) du point sur l'écran du deuxième terminal (100) vers lequel l'appareil de prise de vues du premier terminal (150) est pointé, et
le collage (1162) du au moins un élément parmi l'objet et les métadonnées de l'objet en fonction du point.

4. Le procédé de transmission de données selon la Revendication 1, 2 ou 3, où la transmission du au moins un élément parmi l'objet et les métadonnées de l'objet comprend :
la transmission de données d'un dossier de fichiers de façon à permettre au deuxième terminal (100) de conserver en mémoire les données du dossier de fichiers si l'objet est le dossier de fichiers.

5. Le procédé de transmission de données selon l'une quelconque des Revendications précédentes, où la transmission du au moins un élément parmi l'objet et les métadonnées de l'objet comprend :
la transmission d'une image destinée à permettre au deuxième terminal (100) d'afficher l'image sur l'écran du deuxième terminal (100) si l'objet est l'image.

6. Le procédé de transmission de données selon l'une quelconque des Revendications précédentes, où la réception de la commande de transmission comprend :
la détermination que la commande de transmission est entrée si une opération de poussée d'une interface utilisateur graphique, GUI, d'un logiciel correspondant est activée par un utilisateur du premier terminal (150).

7. Le procédé de transmission de données selon l'une quelconque des Revendications précédentes, où la réception de la commande de transmission comprend :
la réception de la commande de transmission si une indication particulière indiquant un centre d'une vue d'appareil de prise de vues est positionné sur l'objet au cours de l'exécution d'une fonction de prévisualisation de capture d'appareil de prise de vues du premier terminal (150).

8. Un système de transmission de données comprenant :
un écran d'un premier terminal (150) destiné à l'affichage d'un objet et d'au moins une partie d'un écran d'un deuxième terminal (100) sur un écran d'un premier terminal (150), le premier terminal (150) comprenant un appareil de prise de vues destiné à la capture de la partie de l'écran du deuxième terminal (100), et
un processeur de service d'application (154) destiné à la réception d'une commande de transmission de l'objet et à la transmission d'au moins un élément parmi l'objet et des métadonnées de l'objet au deuxième terminal (100) en réponse à la commande de transmission,
où le au moins un élément transmis parmi l'objet et les métadonnées de l'objet est affiché sur l'écran du deuxième terminal (100) et l'objet est affiché à un point de l'écran du deuxième terminal (100) vers lequel l'appareil de prise de vues du premier terminal (150) est pointé, le processeur de service d'application (154) étant agencé de façon à déterminer le point en fonction de l'écran du deuxième terminal (100) possédant un ou plusieurs marqueurs, chaque marqueur comprenant un motif prédéfini représentant la position de chaque marqueur, par la capture, par l'appareil de prise de vues, d'une première image avant que les marqueurs soient placés sur l'écran, la capture, par l'appareil de prise de vues, d'une deuxième image contenant les marqueurs, et la soustraction de la première image de la deuxième image.

9. Le système de transmission de données selon la Revendication 8, où le processeur de service d'application (154) est agencé de façon à copier le au moins un élément parmi l'objet et les métadonnées de l'objet et à coller le au moins un élément copié parmi l'objet et les métadonnées de l'objet vers le deuxième terminal (100).

10. Le système de transmission de données selon la Revendication 8 ou 9, où le processeur de service d'application (154) est agencé de façon à rechercher le point sur l'écran du deuxième terminal (100) vers lequel l'appareil de prise de vues du premier terminal (150) est pointé et à coller le au moins un élément parmi l'objet et les métadonnées de l'objet en fonction du point.

11. Le système de transmission de données selon la Revendication 8, 9 ou 10, où le processeur de service d'application (154) est agencé de façon à transmettre des données d'un dossier de fichiers de façon à permettre au deuxième terminal (100) de conserver en mémoire les données du dossier de fichiers si l'objet est le dossier de fichiers.

12. Le système de transmission de données selon l'une quelconque des Revendications 8 à 11, où le processeur de service d'application (154) est agencé de façon à transmettre une image destinée à permettre au deuxième terminal (100) d'afficher l'image sur l'écran du deuxième terminal (100) si l'objet est l'image.

13. Le système de transmission de données selon l'une quelconque des Revendications 8 à 12, où le processeur de service d'application (154) est agencé de façon à déterminer que la commande de transmission est entrée si une opération de poussée d'une interface utilisateur graphique, GUI, d'un logiciel correspondant est activée par un utilisateur du premier terminal (150).

14. Le système de transmission de données selon l'une quelconque des Revendications 8 à 13, où le processeur de service d'application (154) est agencé de façon à recevoir la commande de transmission si une indication particulière indiquant un centre d'une vue d'appareil de prise de vues est positionné sur l'objet au cours de l'exécution d'une fonction de prévisualisation de capture d'appareil de prise de vues du premier terminal (150).
